# EUROPÄISCHE PATENTSCHRIFT

(11) **EP 1 080 996 B1**
(45) Veröffentlichungstag und Bekanntmachung des Hinweises auf die Patenterteilung: **24.11.2004**
(21) Anmeldenummer: 00118226.0
(22) Anmeldetag: 01.09.2000
(51) Int. Cl.: B60R 21/16, D03D 15/02

(54) **Gassack**
Airbag
Coussin gonflable

(30) Priorität: 01.09.1999 DE 29915364 U
(43) Veröffentlichungstag der Anmeldung: 07.03.2001
(73) Patentinhaber: TRW Automotive GmbH, 73553 Alfdorf (DE)
(72) Erfinder: Ritter, Philipp, 73525 Schwäbisch-Gmünd (DE)
(74) Vertreter: Kitzhofer, Thomas, Dipl.-Ing.

(56) Entgegenhaltungen:
- EP-A- 0 687 596
- WO-A-96/31643
- DE-A- 2 933 263
- DE-A- 3 903 216
- DE-A- 4 226 954
- DE-A- 4 324 487
- DE-U- 29 814 990

## Beschreibung

Die Erfindung betrifft einen Fahrzeuginsassen-Rückhaltegassack nach dem Oberbegriff des Anspruchs 1.

Ein Gassack ist beispielsweise aus der US 5 464 250 bekannt. Als Abstandshalter wirkt hier ein zick-zack-förmig verlaufender Gewebeabschnitt, der an den Randabschnitten mit den Gewebelagen vernäht ist. Dieser Abstandshalter bewirkt, daß der Gassack nicht übermäßig stark ausbaucht, d.h. zwischen seinen Rändern keine allzu große Dicke einnimmt. Andere Arten von Abstandshalter sind sogenannte Fangbänder, die mit den Gewebelagen an ihren Enden vernäht sind und lokal den Abstand begrenzen. Das Anbringen von Abstandshaltern ist sehr teuer und aufwendig und behindert das Umstülpen des Gassacks nach dem Vernähen. Die Anordnung der Abstandshalter ist deshalb sehr kompliziert und nicht an jeder beliebigen Stelle aus Fertigungsgründen möglich. Auf der anderen Seite würden die aufgeblasenen Gassäcke ohne die Abstandshalter unnötig dick werden, was Probleme aufwirft. Die optimale Rückhaltung erfordert teilweise keine extreme Dicke des Gassacks, so daß nur unnötig viel Gas erforderlich ist, um den Gassack prall zu füllen. Zudem erhöht sich mit ansteigender Dicke auch die Gefahr für den Insassen, von dem sich entfaltenden Gassack getroffen zu werden.

Es werden aus diesem Grund Seitengassäcke, sogenannte window bags, hergestellt, die zahlreiche parallele, schmale Kammern aufweisen. Die Gewebelagen sind dabei am Außenumfang des Gassacks und zwischen den Kammern einstückig miteinander verwoben. Die zahlreichen, zum Teil langgestreckten und einen niedrigen Querschnitt aufweisenden Kammern können die Aufblaszeit des Gassacks erhöhen. Sie erfordern zudem eine exakte Gasführung zu den Kammern selbst, z.B. eine Gaslanze, die sich längs des Dachrahmens erstreckt.

Aus der gattungsgemäßen DE-A-39 03 216 ist ein Gassack bekannt, bei dem in die Gewebebahnen Polfäden eingewebt sind, die die Gewebebahnen miteinander verbinden und diese beabstanden.

Die Erfindung schafft einen Gassack, der sich durch extrem einfach und billig herzustellende Abstandshalter auszeichnet, wobei die Abstandshalter zudem die Strömung innerhalb des Gassacks weniger beeinflussen als bisher bekannte. Ferner zeichnet sich der erfindungsgemäße Gassack dadurch aus, daß die Abstandshalter an beliebigen Stellen und in beliebiger Anzahl vorhanden sein können, ohne die Herstellung des Gassacks deutlich zu verteuern oder zu erschwerten. Dies wird durch einen Gassack nach Anspruch 1 erreicht. Gemäß der Erfindung wird der Abstandshalter durch einige der Kett- und/oder Schußfäden gebildet, die, bezogen auf den aufgeblasenen Zustand, die durch ihre zugeordnete Gewebelage gebildete Fläche verlassen und sich in Richtung zur gegenüberliegenden Gewebelage erstrecken und mit Kett- und/oder Schußfäden der gegenüberliegenden Gewebelagen verbunden sind. Beim erfindungsgemäßen Gassack werden die Abstandshalter durch einige Kett- und/oder Schußfäden gebildet, die den Gewebeverbund sozusagen verlassen und sich in Richtung zur gegenüberliegenden Gewebelage erstrecken. Der Abstandshalter ist damit kein separates, an den Gewebelagen zu befestigendes Teil, sondern er ist integraler Bestandteil der Gewebelagen. Die Technik des partiell Miteinanderverwebens von Gewebelagen läßt es zu, die Abstandshalter an beliebigen Stellen zu positionieren. Darüber hinaus behindern die einzelnen Kett- und/oder Schußfäden in dem Bereich, in dem sie als Abstandshalter wirken, die Strömung innerhalb des Gassacks nur geringfügig, da sie nicht zwingend als flächiges Gewebe im Bereich des Abstandshalters ausgebildet sein müssen. So kann das Gas zwischen den einzelnen Fäden hindurchströmen und zu einer schnellen Entfaltung des Gassacks führen. Durch die billige und variable Technik des einstückig miteinander Verwebens lassen sich durch die Erfindung erstmals großflächige, nahezu matratzenartige Gassäcke kostengünstig herstellen.

Die als Abstandshalter fungierenden Kett- und/oder Schußfäden können nach dem Verlassen der durch ihre zugeordnete Gewebelage gebildeten Fläche (üblicherweise die Außenwand des Gassacks) und nach Bildung des Abstandshalters entweder in die gegenüberliegende Gewebelage übergehen, somit integraler Bestandteil dieser Gewebelage werden. Darüber hinaus können die Abstandshalter aber auch nach Bildung des Abstandshalters wieder zurück zu der ihr zugeordneten Gewebelage verlaufen und in diese integral übergehen. Dann müssen sie jedoch im Bereich des Abstandshalters mit Kett- und/oder Schußfäden der gegenüberliegenden Gewebelagen verbunden sein. Dies kann z.B. dadurch erreicht werden, daß auch aus der gegenüberliegenden Gewebelage Kett- und/oder Schußfäden aus dem Verbund gelöst werden und sich zwischen den beiden Außenwänden des Gassacks mit den aus dem Gewebeverbund der gegenüberliegenden Gewebelage herausgelösten Kettund/oder Schußfäden verbinden.

Auf diese Weise lassen sich beispielsweise Abstandshalter erzeugen, die im Querschnitt gesehen eine H-, eine X- oder eine Y-Form bilden.

Die Kett- und/oder Schußfäden, die den Abstandshalter bilden, fehlen im Bereich des Abstandshalters in der ihr zugeordneten Gewebelage. Die Gewebelage wird damit an dieser Stelle weniger gasdicht. Dies kann bewußt dazu verwendet werden, der Gassackaußenwand eine bestimmte Gasdurchlässigkeit zu geben. Wenn die Gasdurchlässigkeit jedoch zu groß wird, kann die Gewebelage, die die Kett- und/oder Schußfäden zur Verfügung stellt, auch wenigstens im Bereich des Abstandshalters beschichtet sein. Unter anderem bei Seitengassäcken, die möglichst lange prall gefüllt sein sollen, sind die Gewebelagen vorzugsweise außenseitig mit Folie beschichtet. Damit können auch zahlreiche Abstandshalter vorgesehen sein, denn es ist durch die Beschichtung mit Folie bezüglich der Gasdurchlässigkeit nicht mehr nachteilig, daß die Außenwand im Bereich der Abstandshalter nur noch wenige Fäden aufweist. Das Gewebe selbst bildet damit im wesentlichen nur noch eine Tragstruktur, und die eigentliche Gasdichtigkeit wird durch die Folie erreicht.

Wenn der Gassack ein großflächiger Seitengassack ist und mehrere Kammern aufweist, die durch einstückiges Miteinanderverweben der gegenüberliegenden Gewebelagen gebildet sind, sind zusätzlich die oben beschriebenen Abstandshalter innerhalb der Kammern vorgesehen. Obwohl die Kammern selbst einen geringen Querschnitt haben, läßt sich die Dicke des Gassacks durch die Abstandshalter nochmals verringern und auf das für die Rückhaltung ausreichende Maß herabsetzen.

Die Abstandshalter können langgestreckt und z.B. linienförmig verlaufen, also eine langgestreckte, gasdurchlässige Wand bilden. Die Abstandshalter können aber auch nur punktförmig oder ringförmig sein, ähnlich wie bei einer Bettmatratze, wo außenseitig sichtbare Knöpfe das Ende von Abstandshaltern bilden.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 einen aufgeblasenen Kopf-Seitengassack nach der Erfindung gemäß einer ersten Ausführungsform,
Figur 2 eine perspektivische Ansicht einer aufgeschnittenen einzelnen Kammer des in Figur 1 gezeigten Gassacks in aufgeblasenem Zustand,
Figur 3 eine Querschnittsansicht durch zwei andere Ausführungsformen des erfindungsgemäßen Gassacks, in seinem nicht aufgeblasenem Zustand,
Figur 4 den Bereich des in Figur 3 gezeigten Gassacks in aufgeblasenem Zustand,
Figur 5 eine Querschnittsansicht durch einen Gassack in aufgeblasenem Zustand gemäß einer vierten und fünften Ausführungsform und
Figur 6 einen Kopf-Seitengassack in aufgeblasenem Zustand gemäß einer sechsten Ausführungsform.

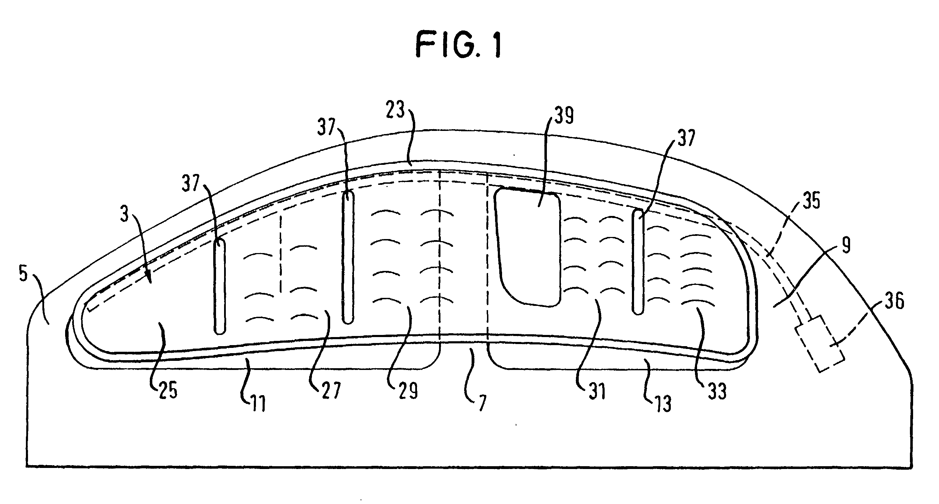

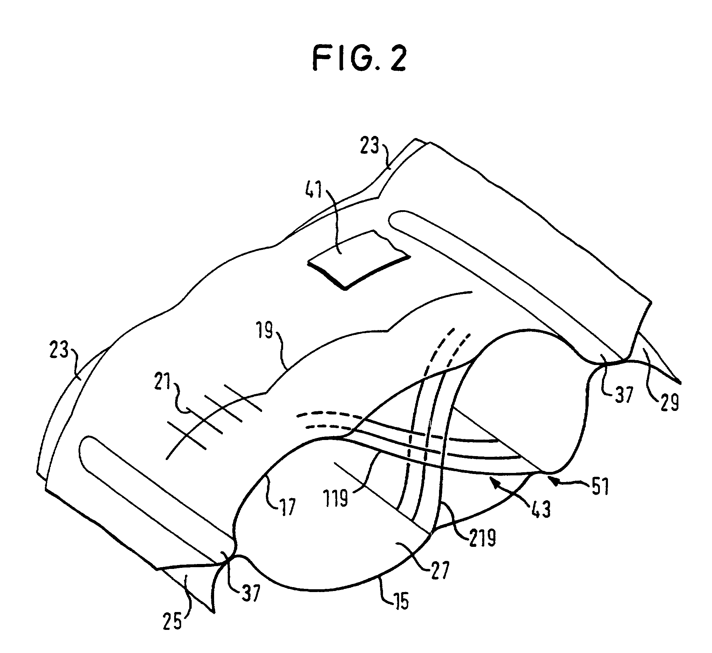

In Figur 1 ist eine Kopf-Seitengassack 3 dargestellt, der sich im aufgeblasenen Zustand im Fahrzeug von der A-Säule 5, über die B-Säule 7 bis zur C-Säule 9 erstreckt und die Seitenscheiben 11, 13 vollständig abdeckt. Der Seitengassack 3 ist großflächig und matratzenförmig mit nahezu konstanter Dicke im aufgeblasenen Zustand ausgebildet. Er besteht aus zwei Gewebelagen 15, 17, die in Figur 2 besser zu erkennen sind. Die Gewebelagen 15, 17 bilden die Außenwände des Gassacks. Beide Gewebelagen 15, 17 bestehen aus Kett- und Schußfäden 21 bzw. 19, wobei in Figur 2 exemplarisch mehrere Kett-Fäden 21 und ein Schußfaden 19 dargestellt sind. Die beiden Gewebelagen 15, 17 sind im Bereich des Außenumfangs 23 einstückig miteinander verwoben.

Der Gassack besteht aus mehreren Kammern 25 bis 33, die strömungsmäßig am unteren Rand des Gassacks miteinander verbunden sind. Eine sogenannte Gaslanze 35 erstreckt sich von der C-Säule 9, ausgehend von einem Gasgenerator 37 in das Innere des Gassacks und verläuft längs des Dachrahmens bis zur A-Säule 5. Zwischen den Kammern 25 bis 33 sind die Gewebelagen 15, 17 in den Bereichen 37, die Trennwände darstellen, ebenfalls einstückig miteinander verwoben. Der Bereich 39 ist großflächig miteinander verwoben, stellt ebenfalls eine Trennwand dar und ist in einem Bereich angeordnet, der vom Kopf des Insassen weit entfernt liegt. Die Trennwände 37 bis 39 sind gasdicht, so daß sie keine Gasströmung von einer in die benachbarte Kammer erlauben.

Der Gassack ist auf der Außenseite beider Gewebelagen 15, 17 durch jeweils eine Folie 41 beschichtet, wobei in Figur 2 nur exemplarisch ein kleiner Abschnitt der Folie 41 zu sehen ist. Tatsächlich bedeckt die Folie 41 die gesamte Außenseite beider Gewebelagen 15, 17. Die Folie 41 stellt sicher, daß der Gassack 3 gasdicht ist.

Figur 2 ist zu entnehmen, wie es erreicht wird, daß der Gassack im Bereich jeder Kammer 27 bis 33 nur eine geringe Dicke aufweist und nur geringfügig nach außen ausbaucht. In jeder Kammer ist wenigstens ein oder sind mehrere Abstandshalter 43 angeordnet, die die Gewebelagen 15, 17 auf Abstand halten. Die Abstandshalter 43 sind durch Fäden der Gewebelagen 15, 17 gebildet, die den Gewebeverbund auf einer bestimmten Strecke verlassen und schließlich wieder in den Gewebeverbund der ursprünglichen Gewebelage oder der gegenüberliegenden Gewebelage übergehen. Die Abstandshalter 43 sind deshalb einstückig in die Gewebelagen 15, 17 integriert.

In Figur 2 sind exemplarisch hierzu einige Schußfäden 119 aus der oberen Gewebelage dargestellt. Diese Schußfäden 119 sind in dem Bereich des dem Bezugszeichen 17 zugeordneten Pfeiles noch in die Gewebelage 17 integriert. Die Gewebelage 17 definiert eine Fläche oder, anders ausgedrückt, eine Außenwand des Gassacks. Die Schußfäden 119 verlassen jedoch dann den Gewebeverbund und damit die durch ihre zugeordnete Gewebelage 17 definierte Fläche und erstrecken sich schräg in Richtung zur gegenüberliegenden Gewebelage 15, in die sie dann im Bereich 51 übergehen. Umgekehrt sind Schußfäden 219 aus der unteren Gewebelage 15 im Bereich des Pfeiles des Bezugszeichens 15 zwar noch im Gewebeverbund vorhanden; sie verlassen jedoch die Gewebelage 15 im Bereich des Abstandshalters 43 und erstrecken sich schräg in Richtung zu der gegenüberliegenden Gewebelage 17, in die sie dann schließlich übergehen. Die Schußfäden 119, 219 bilden, im Querschnitt gesehen, ein "X". Die Schußfäden 119, 219 treffen sich damit zwar, sind aber zwischen den Gewebelagen 15, 17 nicht miteinander verbunden. Dadurch, daß nur einzelne Schußfäden 119, 219 die Gewebelagen 17 bzw. 15 verlassen, ergibt sich keine Trennwand, aber ein Abstandshalter 43, der linear und parallel zu den Trennwänden 37 über nahezu die gesamte Höhe des Gassacks 3 verläuft.

Anstatt der oder zusätzlich zu den Schußfäden 19 können auch Kettfäden 21 aus den Gewebelagen 15, 17 heraus in Richtung der gegenüberliegenden Gewebelage verlaufen, um einen Abstandshalter zu bilden.

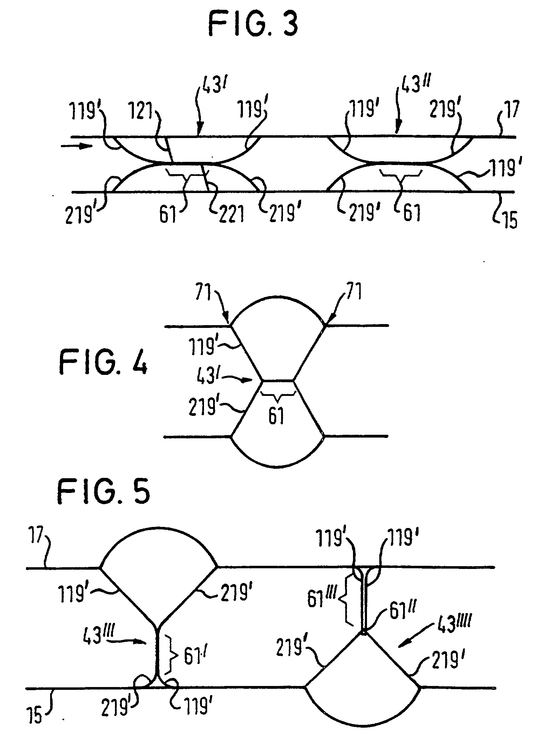

Figur 3 zeigt zwei verschiedene Ausführungsformen des Abstandshalters. Bei der linken Ausführungsform wird der Abstandshalter 43' dadurch gebildet, daß Kettfäden 119' aus der Gewebelage 17 (in Pfeilrichtung, d.h. von links nach rechts beschrieben) die Gewebelage 17 verlassen und in Richtung Gewebelage 15 verlaufen. Ebenso verlassen Kettfäden 219' die Gewebelage 15 in Richtung zur Gewebelage 17. Die Kettfäden 119' und 219' treffen sich und werden in einem Bereich 61 miteinander verbunden, indem Schußfäden 121 aus der oberen Gewebelage 17 und 221 aus der unteren Gewebelage 15 sich bis in den Bereich 61 erstrecken und mit den Kettfäden 119', 219' verbunden, z.B. verwoben sind. Nach dem Bereich 61 verlaufen die Kettfäden 119', 219' ebenso wie die Schußfäden 121, 221 wieder zurück in die ihr zugeordneten Gewebelagen 17 bzw. 15.

Bei der in Figur 3 rechten Ausführungsform ist der Abstandshalter 43" dadurch gebildet, daß die Kettfäden 119', 219' in Richtung zur gegenüberliegenden Gewebelage 15 bzw. 17 verlaufen, im Bereich 61 miteinander verbunden sind, dann aber nicht zurück zu der ihr zugeordneten Gewebelage, sondern zu der gegenüberliegenden Gewebelage verlaufen und in diese Gewebelage übergehen. Aus Gründen der Übersichtlichkeit sind in der rechten Ausführungsform die Schußfäden 121, 221 nicht dargestellt, obwohl sie zur Schaffung des Bereichs 61 vorhanden sind.

In Figur 3 ist der dargestellte Abschnitt des Gassacks im nicht aufgeblasenen, aber geringfügig auseinandergezogenen Zustand dargestellt. In Figur 4 hingegen ist der Gassack im Bereich des Abstandshalters 43' in aufgeblasenem Zustand dargestellt. Zu sehen ist, daß sich im aufgeblasenen Zustand eine H-Form des Abstandshalters 43' ergibt, mit vertikalen Schenkeln, die zu ihren freien Enden hin jeweils schräg nach außen verlaufen, und einem Verbindungsschenkel, der durch den Bereich 61 gebildet ist. Zwischen den Anbindungsstellen 71 wölbt sich der Gassack geringfügig nach außen. Insgesamt ergibt sich somit eine Art Matratzenform.

Bei der in Figur 5 dargestellten Ausführungsform haben die Abstandshalter 43''' und 43"" im Querschnitt eine Y-Form. Diese wird dadurch gebildet, daß die sich aus der Gewebelage 17 herauslösenden Kettfäden 119' in einem Bereich 61' (Mittelsteg des Y) mit den sich herauslösenden Kettfäden 219' verbinden. Im V-förmigen oberen Bereich des Y verlaufen die Fäden voneinander getrennt. Anschließend gehen die Kettfäden 119' in die Gewebelage 15 über und die Kettfäden 219' in die Gewebelage 17. Der Bereich 61' grenzt unmittelbar an die Gewebelage 15 an, nur zu Verdeutlichungszwecken ist das untere Ende des Abschnitts 61' etwas aufgelöst dargestellt.

Bei der rechten Ausführungsform in Figur 5 wird der Abstandshalter 43"" dadurch gebildet, daß die Kettfäden 119' zuerst in Richtung Gewebelage 15 verlaufen, wo sie in einem Bereich 61" mit den Kettfäden 219' aus der Gewebelage 15 verbunden werden. Anschließend verlaufen die Kettfäden 119' wieder zurück in die Gewebelage 17. Bei beiden Ausführungsformen in Figur 5, der linken und der rechten Ausführungsform, sind Schußfäden vorhanden, die die Bereiche 61', 61" und 61''' mit definieren. Bei der rechten Ausführungsform nach Figur 5 muß im übrigen auch sichergestellt sein, daß die Länge der Kettfäden 119' der Länge der Kettfäden 219' im aus dem Gewebeverbund herausgelösten Bereich ist, ansonsten würden sich die Gewebelagen zueinander sehr stark verschieben.

Wenn die Ausführungsformen nach Figur 5 verwendet werden, ist zudem noch zu beachten, daß die Anzahl der Abstandshalter 43''' oder 43"" stets eine gerade Zahl ist, denn im Bereich der Abstandshalter ergibt sich eine Krümmung einer Gewebelage nach außen, wogegen die andere Gewebelage nicht gekrümmt ist. Damit wird auch die mit der Krümmung versehene Wandung in Längsrichtung verkürzt. Nur mit einer geraden Anzahl der Abstandshalter wird diese Verkürzung ausgeglichen.

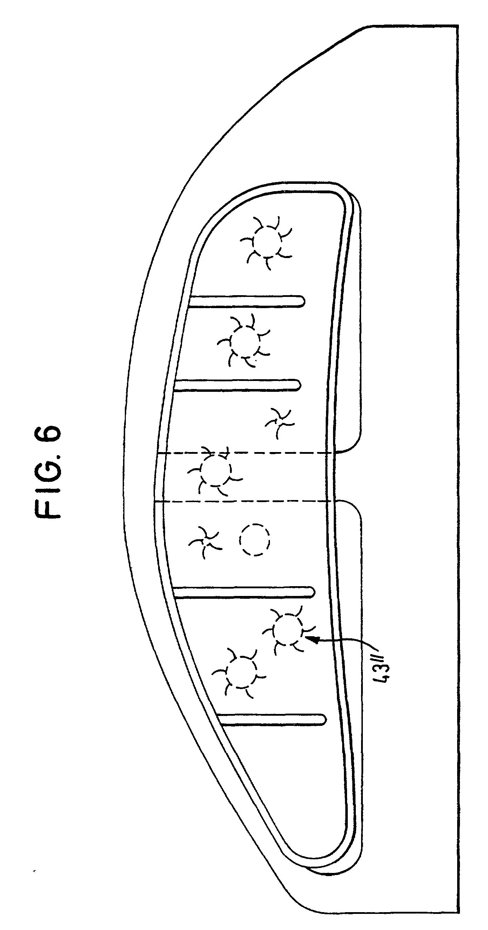

Figur 6 soll darstellen, daß die Abstandshalter nicht nur langgestreckt und linear verlaufen müssen wie in Figur 1, sondern z.B. auch punkt- oder kreisförmig verlaufen können, z.B. wenn die in Figur 5 gezeigten Ausführungsformen so gestaltet werden, daß sich die Kettund Schußfäden im Bereich eines Kreises aus dem Gewebeverbund lösen.

## Patentansprüche

1. Fahrzeuginsassen-Rückhaltegassack,
mit wenigstens zwei gegenüberliegenden Gewebelagen (15, 17), die wenigstens eine mit Gas befüllbare Kammer (25 bis 33) begrenzen,
wobei die Gewebelagen (15, 17) Kett- und Schußfäden (19, 119; 119'; 219; 219'; 21, 121, 221) aufweisen, und
mit wenigstens einem Abstandshalter (43; 43' bis 43""), der mit den Gewebelagen (15, 17) verbunden ist und in aufgeblasenem Zustand den Abstand der Gewebelagen (15, 17) voneinander begrenzt,
**dadurch gekennzeichnet, daß**
die Gewebelagen (15, 17) aus Kett- und Schußfäden (19, 119; 119'; 219; 219'; 21, 121, 221) bestehen und
der Abstandshalter (43; 43' bis 43"") ohne an den Gewebelagen (15, 17) zu befestigende Teile, sondern integral durch einige der die Gewebelage selbst erzeugenden Kett- und/oder Schußfäden (19, 119; 119'; 219; 219'; 21, 121, 221) gebildet ist, die, bezogen auf den aufgeblasenen Zustand, die durch ihre zugeordnete Gewebelage (15, 17) gebildete Fläche und den Gewebeverbund verlassen, so daß die zugeordnete Gewebelage (15, 17) unvollständig und gasdurchlässiger wird, die sich in Richtung zur gegenüberliegenden Gewebelage (17 bzw. 15) erstrecken und die mit Kett- und/oder Schußfäden (19, 119; 119'; 219; 219'; 21, 121, 221) der gegenüberliegenden Gewebelage (17 bzw. 15) verbunden sind.

2. Gassack nach Anspruch 1, **dadurch gekennzeichnet, daß** die als Abstandshalter (43; 43", 43"') fungierenden Kett- und/oder Schußfäden (19, 119; 119'; 219; 219'; 21, 121, 221) die durch ihre zugeordnete Gewebelage (15, 17) gebildete Fläche verlassen und, nach Bildung des Abstandshalters (43, 43", 43"') in die gegenüberliegende Gewebelage (17 bzw. 15) übergehen.

3. Gassack nach Anspruch 1, **dadurch gekennzeichnet, daß** die als Abstandshalter (43', 43"") fungierenden Kett- und/oder Schußfäden (19, 119; 119'; 219; 219'; 21, 121, 221), die durch ihre zugeordnete Gewebelage (15, 17) gebildete Fläche zur Bildung des Abstandshalters (43', 43"") verlassen und nach Bildung des Abstandshalters (43', 43"") wieder in die ihnen zugeordnete Gewebelage (15, 17) übergehen.

4. Gassack nach einem der vorhergehenden Ansprüche, **dadurch gekennzeichnet, daß** einige der Kett- und/oder Schußfäden (19, 119; 119'; 219; 219'; 21, 121, 221) beider gegenüberliegender Gewebelagen (15, 17) die durch ihre zugeordnete Gewebelage (15, 17) gebildete Fläche in Richtung zur gegenüberliegenden Gewebelage (17 bzw. 15) verlassen und zur gemeinsamen Bildung eines Abstandshalters (43' bis 43'''') zwischen den Gewebelagen (15, 17) wenigstens abschnittsweise im Bereich (61 bis 61") des Abstandshalters (43' bis 43"") miteinander verbunden sind.

5. Gassack nach Anspruch 4, **dadurch gekennzeichnet, daß** die Verbindung im Bereich (61 bis 61'') des Abstandshalters (43' bis 43"") durch Verweben erfolgt.

6. Gassack nach Anspruch 4 oder 5, **dadurch gekennzeichnet, daß** die den Abstandshalter (43, 43' bis 43'''') bildenden Kett- und/oder Schußfäden (19, 119; 119'; 219; 219'; 21, 121, 221) in aufgeblasenem Zustand des Gassacks und im Querschnitt gesehen eine H-, X- oder Y-Form bilden.

7. Gassack nach Anspruch 6, **dadurch gekennzeichnet, daß** zur Bildung der H-Form die den Abstandshalter (43', 43") bildenden Kett- und/oder Schußfäden (19, 119; 119'; 219; 219'; 21, 121, 221) aus gegenüberliegenden Gewebelagen (15, 17) sich aufeinander zu erstrecken und, zur Bildung des Verbindungsschenkels der H-Form, in einem Bereich (61) miteinander verwoben sind und schließlich zu der ihnen zugeordneten oder zur gegenüberliegenden Gewebelage (15, 17) verlaufen und in diese übergehen.

8. Gassack nach Anspruch 6, **dadurch gekennzeichnet, daß** zur Bildung der X-Form die den Abstandshalter (43) bildenden Kett- und/oder Schußfäden (19, 119; 119'; 219; 219'; 21, 121, 221) aus gegenüberliegenden Gewebelagen (15, 17) sich aufeinander zu und aneinander vorbei erstrecken und schließlich in die gegenüberliegende Gewebelage (17 bzw. 15) übergehen.

9. Gassack nach Anspruch 6, **dadurch gekennzeichnet, daß** der Mittelsteg (61''') der Y-Form durch die Kett- und/oder Schußfäden (19, 119; 119'; 219; 219'; 21, 121, 221) einer Gewebelage (17) gebildet ist.

10. Gassack nach Anspruch 6, **dadurch gekennzeichnet, daß** der Mittelsteg (61') der Y-Form durch miteinander verbundene Kett- und/oder Schußfäden (19, 119; 119'; 219; 219'; 21, 121. 221) gegenüberliegender Gewebelagen (15, 17) gebildet ist, die im Bereich des V-förmigen Abschnitts der Y-Form voneinander getrennt verlaufen.

11. Gassack nach einem der vorhergehenden Ansprüche, **dadurch gekennzeichnet, daß** wenigstens eine Gewebelage (15, 17) wenigstens im Bereich der Abstandshalter (43, 43' bis 43"") beschichtet ist.

12. Gassack nach Anspruch 11, **dadurch gekennzeichnet, daß** der Gassack durch eine außenseitig aufgebrachte Folie (41) beschichtet ist.

13. Gassack nach einem der vorhergehenden Ansprüche, **dadurch gekennzeichnet, daß** der Gassack mehrere Kammern (25 bis 33) aufweist und der Abstandshalter (43, 43' bis 43"") innerhalb einer Kammer (27 bis 33) vorgesehen ist.

14. Gassack nach einem der vorhergehenden Ansprüche, **dadurch gekennzeichnet, daß** er ein großflächiger Seitengassack (3) mit mehreren Kammern (25 bis 33) ist, daß die Gewebelagen (15, 17) zur Bildung der Kammern (25 bis 33) und des Außenumfangs (23) einstückig miteinander verwoben sind und daß in wenigstens einigen der Kammern (27, 33) Abstandshalter (43, 43' bis 43"") vorgesehen sind.

15. Gassack nach Anspruch 14, **dadurch gekennzeichnet, daß** sich die Abstandshalter (43, 43' bis 43"") linienförmig über einen Abschnitt des Gassacks oder punkt- oder ringförmig erstrecken.

## Claims

1. A vehicle occupant restraint gas bag,
comprising at least two opposite fabric layers (15, 17), which define at least one chamber (25 to 33) adapted to be filled with gas,
the fabric layers (15, 17) including warp and weft threads (19, 119; 119'; 219; 219'; 21, 121, 221), and
comprising at least one spacer (43; 43' to 43"") which is joined to the fabric layers (15, 17) and in the inflated state limits the spacing of the fabric layers (15, 17) from each other,
**characterized in that**
the fabric layers (15, 17) consist of warp and weft threads (19, 119; 119'; 219; 219'; 21, 121, 221), and
the spacer (43; 43' to 43"") is formed without any parts to be fastened to the fabric layers (15, 17), but integrally by some of the warp and/or weft threads (19, 119; 119'; 219; 219'; 21, 121, 221) which produce the fabric layer itself and, as related to the inflated state, depart from the surface area formed by their associated fabric layer (15, 17) and the fabric composite so that the associated fabric layer (15, 17) becomes incomplete and more permeable to gas, and which extend towards the opposite fabric layer (17 or 15, respectively) and are joined to warp and/or weft threads (19, 119; 119'; 219; 219'; 21, 121, 221) of the opposite fabric layer (17 or 15, respectively).

2. The gas bag according to claim 1, **characterized in that** the warp and/or weft threads (19, 119; 119'; 219; 219'; 21, 121, 221) acting as spacer (43; 43", 43''') depart from the surface area formed by their associated fabric layer (15, 17) and, after forming the spacer (43, 43", 43"'), continue into the opposite fabric layer (17 or 15, respectively).

3. The gas bag according to claim 1, **characterized in that** the warp and/or weft threads (19, 119; 119'; 219; 219'; 21, 121, 221) acting as spacer (43', 43"") depart from the surface area formed by their associated fabric layer (15, 17) in order to form the spacer (43', 43"") and, after forming the spacer (43', 43""), return back into the fabric layer (15, 17) associated with them.

4. The gas bag according to any of the preceding claims, **characterized in that** some of the warp and/or weft threads (19, 119; 119'; 219; 219'; 21, 121, 221) of both oppositely located fabric layers (15, 17) depart from the surface areas formed by their associated fabric layers (15, 17) towards the opposite fabric layer (17 or 15, respectively) and, in order to collectively form a spacer (43' to 43"") between the fabric layers (15, 17), are joined together at least section-wise in the portion (61 to 61") of the spacer (43' to 43"").

5. The gas bag according to claim 4, **characterized in that** the joining in the portion (61 to 61") of the spacer (43' to 43"") is effected by weaving.

6. The gas bag according to claim 4 or 5, **characterized in that** the warp and/or weft threads (19, 119; 119'; 219; 219'; 21, 121, 221) forming the spacer (43, 43' to 43"") form an H-, X- or Y-shape in the inflated state of the gas bag and viewed in cross-section.

7. The gas bag according to claim 6, **characterized in that**, in order to form the H-shape, the warp and/or weft threads (19, 119; 119'; 219; 219'; 21, 121, 221) forming the spacer (43', 43") extend towards each other from opposite fabric layers (15, 17) and, in order to form the connecting leg of the H-shape, are interwoven in a portion (61) and finally pass on to the fabric layer associated with them or to the opposite fabric layer (15, 17) to continue thereinto.

8. The gas bag according to claim 6, **characterized in that**, in order to form the X-shape, the warp and/or weft threads (19, 119; 119'; 219; 219'; 21, 121, 221) from opposite fabric layers (15, 17) forming the spacer (43) extend towards each other and past each other and finally continue into the opposite fabric layer (17 or 15, respectively).

9. The gas bag according to claim 6, **characterized in that** the central piece (61'") of the Y-shape is formed by the warp and/or weft threads (19, 119; 119'; 219; 219'; 21, 121, 221) of one fabric layer (17).

10. The gas bag according to claim 6, **characterized in that** the central piece (61') of the Y-shape is formed by interconnected warp and/or weft threads (19, 119; 119'; 219; 219'; 21, 121, 221) of opposite fabric layers (15, 17), which in the region of the V-shaped section of the Y-shape run separated from each other.

11. The gas bag according to any of the preceding claims, **characterized in that** at least one fabric layer (15, 17) is coated at least in the region of the spacers (43, 43' to 43"").

12. The gas bag according to claim 11, **characterized in that** the gas bag is coated by a film (41) applied to the outer side.

13. The gas bag according to any of the preceding claims, **characterized in that** the gas bag has a plurality of chambers (25 to 33) and the spacer (43, 43' to 43"") is provided within a chamber (27 to 33).

14. The gas bag according to any of the preceding claims, **characterized in that** it is a large-area side gas bag (3) having a plurality of chambers (25 to 33), that for forming the chambers (25 to 33) and the outer periphery (23), the fabric layers (15, 17) are interwoven in one piece, and that in at least some of the chambers (27, 33) spacers (43, 43' to 43"") are provided.

15. The gas bag according to claim 14, **characterized in that** the spacers (43, 43' to 43"") extend linearly over a section of the gas bag or in a point or ring shape.

## Revendications

1. Coussin à gaz de retenue d'occupants d'un véhicule,
comportant deux couches de tissu (15, 17) opposées, qui délimitent au moins une chambre (25 à 33) qui peut être remplie de gaz,
les couches de tissu (15, 17) présentant des fils de chaîne et de fils de trame (19, 119 ; 119'; 219 ; 219' ; 21, 121, 221) et
comportant au moins un espaceur (43 ; 43' à 43 ""), qui est relié aux couches de tissu (15, 17) et délimite, à l'état gonflé, l'espacement entre les couches de tissu (15,17),
**caractérisé en ce que**
les couches de tissu (15, 17) sont constituées par des fils de chaîne et des fils de trame (19,119 ; 119' ; 219 ; 219' ; 21, 121, 221) et
**en ce que** l'espaceur (43 ; 43' à 43"") est formé sans parties à fixer sur les couches de tissu (15, 17), mais d'un seul tenant par certains fils de chaîne et/ou fils de trame (19, 119 ; 119' ; 219 ; 219' ; 21, 121, 221) produisant la couche de tissu proprement dite, lesquels, par rapport à l'état gonflé, quittent la surface formée par leur couche de tissu (15, 17) associée et le tissu composite de sorte que la couche de tissu (15, 17) associée devient incomplète et plus perméable au gaz, s'étendent en direction de la couche de tissu (17 ou 15, respectivement) opposée et sont reliés avec des fils de chaîne et/ou des fils de trame (19, 119 ; 119' ; 219 ; 219' ; 21, 121, 221) de la couche de tissu opposée (17 ou 15, respectivement).

2. Coussin à gaz selon la revendication 1, **caractérisé en ce que** les fils de chaîne et/ou fils de trame (19, 119 ; 119' ; 219 ; 219' ; 21, 121, 221) faisant office d'espaceur (43 ; 43" ; 43"') quittent la surface formée par leur couche de tissu (15, 17) associée et se transforment en la couche de tissu (15, 17) opposée après avoir formé l'espaceur (43, 43", 43"").

3. Coussin à gaz selon la revendication 1, **caractérisé en ce que** les fils de chaîne et/ou fils de trame (19, 119 ; 119' ; 219 ; 219' ; 21, 121, 221) faisant office d'espaceur (43', 43"') quittent la surface formée par leur couche de tissu (15, 17) associée pour former l'espaceur (43', 43"") et, après avoir formé l'espaceur (43', 43""), se transforment de nouveau en la couche de tissu (15, 17) qui leur est associée.

4. Coussin à gaz selon l'une des revendications précédentes, **caractérisé en ce que** certains les fils de chaîne et/ou fils de trame (19, 119 ; 119' ; 219 ; 219' ; 21, 121, 221) des deux couches de tissu (15, 17) opposées quittent la surface formée par leur couche de tissu associée (15, 17) en direction de la couche de tissu opposée (17 ou 15, respectivement) et sont reliées les unes aux autres pour former en commun un espaceur (43' à 43"") entre les couches de tissu (15, 17), au moins par portions dans la zone (61 à 61 ") de l'espaceur (43' à 43"").

5. Coussin à gaz selon la revendication 4, **caractérisé en ce que** la liaison dans la zone (61 à 61") de l'espaceur (43' à 43"") a lieu par tissage.

6. Coussin à gaz selon la revendication 4 ou 5, **caractérisé en ce que** les fils de chaîne et/ou fils de trame (19, 119 ; 119' ; 219 ; 219' ; 21, 121, 221) formant l'espaceur (43, 43' à 43"") produisent une forme en H, en X ou en Y, à l'état gonflé du coussin à gaz et vu en section transversale.

7. Coussin à gaz selon la revendication 6, **caractérisé en ce que** pour produire une forme en H, les fils de chaîne et/ou fils de trame (19, 119 ; 119' ; 219 ; 219' ; 21, 121, 221) provenant de couches de tissu opposées (15, 17) et formant l'espaceur (43', 43") s'étendent les uns vers les autres et, pour former la branche de liaison de la forme en H, ils sont tissés les uns avec les autres dans une zone (61) et s'étendent enfin vers la couche de tissu (15, 17) qui leur est associée ou opposée, et se transforment en celle-ci.

8. Coussin à gaz selon la revendication 6, **caractérisé en ce que** pour produire la forme en X, les fils de chaîne et/ou fils de trame (19, 119 ; 119' ; 219 ; 219' ; 21, 121, 221) provenant de couches de tissu opposées (15, 17) et formant l'espaceur (43', 43") s'étendent les uns vers les autres et passent les uns devant les autres et se transforment enfin en la couche de tissu (17 ou 15, respectivement) opposée.

9. Coussin à gaz selon la revendication 6, **caractérisé en ce que** la traverse médiane (61"') de la forme en Y est formée par les fils de chaîne et/ou fils de trame (19, 119 ; 119' ; 219 ; 219' ; 21, 121, 221) d'une couche de tissu (17).

10. Coussin à gaz selon la revendication 6, **caractérisé en ce que** la traverse médiane (61') de la forme en Y est formée par des fils de chaîne et/ou fils de trame (19, 119 ; 119' ; 219 ; 219' ; 21, 121, 221) de couches de tissus (15, 17) opposées, qui s'étendent séparément les uns des autres dans la zone du tronçon en forme de V de la forme en Y.

11. Coussin à gaz selon l'une des revendications précédentes, **caractérisé en ce qu'**au moins une couche de tissu (15, 17) est revêtue au moins dans la zone des espaceurs (43, 43' à 43"").

12. Coussin à gaz selon la revendication 12, **caractérisé en ce que** le coussin à gaz est revêtu par une feuille (41) appliquée sur la face extérieure.

13. Coussin à gaz selon l'une des revendications précédentes, **caractérisé en ce que** le coussin à gaz présente plusieurs chambres (25 à 53), et **en ce que** l'espaceur (43, 43' à 43"") est prévu à l'intérieur d'une chambre (27 à 33).

14. Coussin à gaz selon l'une des revendications précédentes, **caractérisé en ce qu'**il est un coussin à gaz latéral (3) à grande surface avec plusieurs chambres (25 à 33), **en ce que** les couches de tissu (15, 17) sont tissées les unes avec les autres d'un seul tenant pour former les chambres (25 à 33) et la périphérie extérieure (23), et **en ce que** des espaceurs (43, 43' à 43"") sont prévus dans au moins certaines des chambres (27, 33).

15. Coussin à gaz selon la revendication 14, **caractérisé en ce que** les espaceurs (43, 43' à 43"") s'étendent en forme linéaire sur un tronçon du coussin à gaz ou en forme ponctuelle ou annulaire
